# EUROPÄISCHE PATENTSCHRIFT

(11) **EP 0 703 268 B1**
(45) Veröffentlichungstag und Bekanntmachung des Hinweises auf die Patenterteilung: **13.01.1999**
(21) Anmeldenummer: 95112256.3
(22) Anmeldetag: 04.08.1995
(51) Int. Cl.: C08J 11/24

(54) **Verfahren zur Rückgewinnung von Sekundärpolyolen aus mit nichtglykolysierbaren Stoffen vermischten Polyaddukten**
Process for the recovery of secondary polyols from polyadducts mixed with nonglycolisable materials
Procédé de récupération de polyols secondaires à partir de produits de polyaddition mélangés avec des matières non glycolisables

(30) Priorität: 22.09.1994 DE 4433834
(43) Veröffentlichungstag der Anmeldung: 27.03.1996
(73) Patentinhaber: DAIMLER-BENZ AKTIENGESELLSCHAFT, 70567 Stuttgart (DE)
(72) Erfinder: Kettemann, Bernd-Uwe, Dipl.-Ing., D-89275 Thalfingen (DE); Melchiorre, Michele, Dipl.-Ing., D-89134 Blaustein (DE)

(56) Entgegenhaltungen:
- DE-A- 3 232 461

## Beschreibung

Die Erfindung betrifft ein Verfahren zur Wiederverwertung von Kunststoffabfällen und/oder Kunststoffaltmaterial aus Polyadditionsprodukten gemäß dem Oberbegriff des Anspruchs 1, wie es beispielsweise aus der DE-OS 32 32 461 als bekannt hervorgeht.

Polyurethanschaumstoffe werden heute allein für sich oder im Verbund mit anderen chemischen Verbindungen und verstärkenden Stoffen, z.B. Glasfasern, in den verschiedensten technischen Produkten eingesetzt. Dabei nehmen die Polyurethanschaumstoff-Abfälle bei der Herstellung dieser Produkte und auch die später anfallenden, wegzuwerfenden, ausgedienten Produkte, die als Hauptbestandteil Polyurethan enthalten, mengenmäßig immer mehr zu. Bei der Beseitigung dieser Abfälle treten daher einmal immer größer werdende Umweltprobleme auf und andererseits stellt die Deponierung dieser Abfälle eine Vergeudung von wertvollen Naturresourcen dar.

Die eingangs erwähnte Druckschrift beeinhaltet ein Verfahren zur Rückgewinnung von Sekundärpolyolen aus vorzerkleinerten Kunststoffabfällen, die in soweit sortenrein vorliegen, als nur glykolysierbare Komponenten in den Abfällen enthalten sein dürfen. Die glykolytische Spaltung der Abfälle erfolgt - abgesehen von einer anschließenden vorsichtigen Abkühlung und Entspannung - in einem einzigen Behandlungsschritt in einem Scherreaktor. Dies setzt eine hohe Verweilzeit in dem Scherreaktor voraus, die wegen des Fördereffektes des mit gegenläufigen Schnecken versehenen Scherreaktors dort praktisch nicht realisierbar sind. Das bekannte Verfahren ist nicht einsetzbar zur Behandlunc von "verunreinigten" Kunststoffabfällen, die also nichtglykolysierbare Begleitstoffe enthalten. Derartige Komponenten würden in dem Scherreaktor agglomerieren und ihn verstopfen und mechanisch blockieren.

Für die Rückgewinnung Wiederverwertung von Polyurethanschaumstoff-Abfällen sind bereits aus dem Stande der Technik zahlreiche Verfahrensprozesse bekannt; außer der bereits eingangs genannten DE-OS 32 32 461 kann hierzu beispielsweise auch noch auf die DE-AS 25 16 863, die DE-OS 41 40 967, die DE-OS 42 17 024, die EP-PS 0 011 661 oder die US-PS 4 317 939 verwiesen werden. Die Vielzahl der einschlägigen Schutzrechtsanmeldungen bzw. Schutzrechte - die obige Aufstellung erhebt bei weitem nicht einen Anspruch auf Vollständigkeit - läßt erkennen, daß offensichtlich keines der beanspruchten Verfahren eine bisher allgemein befriedigende Problemlösung anbietet. Dabei sollen auch die Kosten wirtschaftlich vertretbar sein, z.B. soll die Menge der zur Umsetzung des zerkleinerten Ausgangsmaterials eingesetzten Glykolysate im Vergleich zum Stand der Technik möglichst gering sein, was nicht nur die Kosten, sondern auch die zu verarbeitenden Volumina günstig beeinflußt.

In der DE 42 16 636 C1 ist ein Verfahren zum Zerlegen und Trennen von Stanzabfällen aus Verbundbauteilen, beispielsweise aus Instrumententafeln von Pkw's beschrieben, die aus einem tragenden, faserverstärkten Kern, aus einer Lage aus PU-Schaum und aus einer Außenfolie aus thermoplastischem Kunststoff bestehen. Bei dem Trennen der Kunststoffe fällt der PU-Schaum in krümeliger Form an, wobei dem abgezogenen PU-Granulat pulverisierte Bruchstücke der anderen Komponenten bis zu einem Anteil von insgesamt etwa 30 % beigemischt sind.

Der Erfindung liegt die Aufgabe zugrunde, ein verbessertes und technisch einfach durchzuführendes Verfahren zur Rückgewinnung von Sekundärpolyolen aus Polyadditionsprodukten, welche mit nichtglykolysierbaren Zusatzstoffen versetzt sind, zu schaffen. Die zu gewinnenden Polyole sollen direkt wieder für die Herstellung von neuen qualitativ hochwertigen Polyurethanprodukten als Rohstoff einsetzbar sein.

Die gestellte Aufgabe wird erfindungsgemäß mit den kennzeichnenden Merkmalen des Anspruchs 1 gelöst. Die Unteransprüche stellen bevorzugte Ausführungsformen des erfindungsgemäßen Verfahrens nach Anspruch 1 dar.

Allgemein kann die Erfindung einschließlich zweckmäßiger Ausgestaltungen folgendermaßen zusammengafaßt werden: Es handelt sich um ein Verfahren zur Rückgewinnung von Sekundärpolyolen aus Polyadduktkonzentraten, die nichtglykolysierbare Begleitstoffe enthalten. Dabei wird das vorzerkleinerte Polyadduktkonzentrat unter Zugabe von Glykol(en) in einem Scherreaktor bei angehobener Temperatur und Druck aber bei relativ geringer Verweilzeit vorbehandelt, wobei die nichtglykolysierbaren Bestandteile weiter zerkleinert und dispergiert und die Polyaddukte vorglykolysiert werden. Das so erhaltene Vorprodukt wird in anschließenden Rührreaktor(en) bei etwas angehobenem Temperaturniveau und während längerer Behandlungszeiten zunächst ohne und anschließend unter weiterer Glykolzugabe vollständig abgebaut. Aus dem schließlich erhaltenen Sekundärpolyol kann ein Kunststoff erzeugt werden, der zu neuen Kunststoffbauteilen weiterverarbeitet werden kann.

Nachfolgend wird der Erfindungsgegenstand anhand eines Beispieles noch näher erläutert:
Als Ausgangsmaterial wurde ein Polyurethankonzentrat eingesetzt, welches bei der Aufbereitung von Stanzabfällen aus der Fabrikation von Pkw-Instrumententafeln anfällt; ein entsprechendes Aufbereitungsverfahren für die Stanzabfälle ist in der o.g. Patentschrift DE 42 16 638 C1 beschrieben. Das dabei anfallende Polyurethankonzentrat ist etwa folgendermaßen zusammengesetzt:
- 70 Gew.-%: Polyurethan (PU),
- 20 Gew.-%: Polyproylen (PP),
- 4 Gew.-%: Acryl-Butadien-Styrol/Polyvenylchlorid-Folie (ABS/PVC-Folie) und
- 6 Gew.-%: Glasfasern.
Dem Polyurethankonzentrat wurden in einem Scherreaktor eine Glykolmischung aus Diethylenglykol (DEG) und 1,2-Propylenglycol (PG) in einer Menge von 20 Gew.-% (bezogen auf die Aufgabemenge) hinzugefügt und die Mischung eine relativ kurze Zeitspanne darin intensiv scherbeansprucht. Nach der Scherbeanspruchung wurde das so erhaltene vorglykolysierte und dispergierte Vorprodukt in einem, gesonderten Behälter - erster Rührreaktor - bei einer Temperatur von 195°C während eines Zeitraumes von 45 bis 75 Minuten intensiv durchgerührt. Es wurde ein Vorglykolysat erhalten, in dem in der flüssigen Phase die anderen, nichtglykolysierbaren, pulverisierten Bestandteile und die Glasfasern dispers verteilt waren. Das Vorglykolysat wurde anschließend in einem weiteren Rührreaktor bei einer Temperatur von 190°C während eines Zeitraumes von 45 bis 75 Minuten vollständig glykolysiert. Dabei wurde nochmals eine 30 Gew.-% Glykolmischung, bezogen auf das Vorglykolsat, bestehend wiederum aus Diethylenglykol (DEG) und 1,2-Propylenglykol (PG) hinzugefügt und die Temperatur bei 190°C gehalten. Die Menge an der in der 3. Stufe dem Vorglykolsat hinzugefügten Glykolmischung steht dabei in einem gewissen Gewichtsverhältnis zu der in der 1. Stufe den Polyurethanabfällen zugemischten Glykolmischung.

Bei dem erhaltenen homogenen Polyolgemisch wurden folgende Analysedaten erhalten:

| | |
|---|---|
| 0H-Zahl (Hydroxyäquivalentgewicht): | 398 |
| Säurezahl (freie organische Säure): | 0,31 |
| Viskosität bei 50°C: | 2 500 mPa.s. |
| Die Größe der Restbestandteile war | < 300 µm. |

Das erhaltene Sekundärpolyol wurde mit geeigneten Additiven zu einem chemisch und dispersiv stabilen Rohprodukt abgemischt. Das solcherart formulierte Sekundärpolyol wurde auf konventionellen Polyurethanschäumanlagen verarbeitet, welche für gefüllte Systeme geeignet waren.

Bei einem daraus hergestellten Bauteil - C-Säulenverkleidung für das S-Klasse-Coupé der Anmelderin, und zwar aus Polyurethanhartschaum mit einer eingelegten Glasmatte mit einer Dichte von 300 g/m² - wurden folgende Kenndaten ermittelt:

| | |
|---|---|
| Rohdichte | 608 kg/m², |
| Schlagzähigkeit | 17,6 mJ/mm² und |
| Biegefestigkeit | 58 N/mm² |

Die mit dem erfindungsgemäßen Verfahren erzielten Vorteile liegen insbesondere darin, daß in einer technisch einfach und kostengünstigen Verfahrensweise Kunststoffabfälle und Kunststoffaltmaterial aus Polyadditionsprodukten aufbereitet und das daraus gewonnene Sekundärpolyol als Rohstoff zur Herstellung von neuen, vollwertigen PU-Kunststoffbauteilen verwendet werden kann.

## Patentansprüche

1. Verfahren zur Wiederverwertung von Kunststoffabfällen und/ oder Kunststoffaltmaterial aus Polyadditionsprodukten von Diolen und Diisocyanaten, insbesondere von Polyurethanen, wobei das Ausgangsmaterial zuerst vorzerkleinert, mit Diol(en) vermischt und unter Einwirkung von Wärme und mechanischer Energie zu einem Polyolgemisch umgesetzt und das so erhaltene Sekundärpolyol als Rohstoff für die Herstellung von Kunststoff-Neuteilen eingesetzt wird,
**dadurch gekennzeichnet,**
daß zur Wiederverwertung von Kunststoffabfällen, die mit nichtglykolisierbaren Zusatzstoffen vermischt oder verbunden sind, das Umsetzen zu einem Polyolgemisch in den drei folgenden Schritten erfolgt:
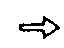 das zerkleinerte Ausgangsmaterial wird unter - erster - Zugabe von Glykol(en) in einem Verhältnis von 10:1 bis 1:1 bei einer Temperatur von 150 bis 250°C 1 bis 15 Minuten lang unter Zwangsschereinfluß weiter zerkleinert, wobei vor allem die nichtglykolisierbaren Stoffe zerkleinert sowie dispergiert und die glykolisierbaren Stoffe vorglykolysiert werden und ein nachfolgend "Vorprodukt" genanntes Gemisch erzeugt wird,
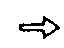 die Glykolysierung der Polyadditionsprodukte aus dem Vorprodukt wird in einem örtlich gesonderten Behandlungsgefäß bei einer Temperatur von 150 bis 280°C 30 bis 150 Minuten lang unter ständigem Rühren fortgesetzt und das entstehende, nachfolgend "Vorglykolysat" genannte Gemisch homogenisiert,
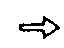 nach einer - zweiten - Glykolzugabe im Verhältnis 10:1 bis 1:1 werden die Polyadditionsprodukte bei gleicher Temperatur und unter Aufrechterhaltung des Rührens weitere 30 bis 150 Minuten lang weitgehend zu einem nachfolgend "Sekundärpolyol" genannten Gemisch abgebaut und die in diesem Gemisch enthaltenen nichtglykolysierbaren Bestandteile weiterhin dispergiert.

2. Verfahren nach Anspruch 1,
**dadurch gekennzeichnet,**
daß bei der ersten Glykol zugabe zu dem vorzerkleinerten Ausgangsmaterial ein Glykol oder ein Glykolgemisch in einem Gewichtsverhältnis von 7:1 bis 4:1 zugegeben wird.

3. Verfahren nach Anspruch 1,
**dadurch gekennzeichnet,**
daß bei der ersten Glykolzugabe zu dem vorzerkleinerten Ausgangsmaterial Diethylenglykol (DEG) oder ein Gemisch von Diethylenglykol und 1,2-Propylenglykol in einem Gewichtsverhältnis von 7:1 bis 4:1 zugegeben wird.

4. Verfahren nach Anspruch 1,
**dadurch gekennzeichnet,**
daß bei der ersten Glykol zugabe zu dem vorzerkleinerten Ausgangsmaterial ein vorerhitztes Diol zugegeben wird bzw. vorerhitzte Diole zugegeben werden.

5. Verfahren nach Anspruch 1,
**dadurch gekennzeichnet,**
daß die Zwangsscherbeanspruchung des Gemischs in der ersten Behandlungsstufe in einem Scherreaktor erfolgt.

6. Verfahren nach Anspruch 1,
**dadurch gekennzeichnet,**
daß die nichtglykolisierbaren Bestandteile des Vorproduktes in der ersten Behandlungsstufe auf eine Teilchengröße von 1000 bis 50 µm zerkleinert werden.

7. Verfahren nach Anspruch 6,
**dadurch gekennzeichnet,**
daß die nichtglykolisierbaren Bestandteile des Vorproduktes in der ersten Behandlungsstufe auf eine Teilchengröße von 400 bis 100 µm zerkleinert werden.

8. Verfahren nach Anspruch 1,
**dadurch gekennzeichnet,**
daß das Gemisch in der ersten Behandlungsstufe während eines Zeitraumes von 1 bis 5 Minuten unter Einhaltung einer Temperatur von 180 bis 220°C zwangsscherbeansprucht wird.

9. Verfahren nach Anspruch 1,
**dadurch gekennzeichnet,**
daß die Zwangsscherbeanspruchung des Gemisches in der ersten Behandlungsstufe unter einem Überdruck von 5 bis 300 bar durchgeführt wird.

10. Verfahren nach Anspruch 9,
**dadurch gekennzeichnet,**
daß die Zwangsscherbeanspruchung des Gemisches in der ersten Behandlungsstufe unter einem Überdruck von 10 bis 100 bar durchgeführt wird.

11. Verfahren nach Anspruch 1,
**dadurch gekennzeichnet,**
daß das in der ersten Behandlungsstufe erhaltene Vorprodukt in einem anschließenden Rührreaktor während eines Zeitraumes von 60 bis 90 Minuten unter Einhaltung einer Temperatur von 190 bis 200°C intensiv durchmischt wird.

## Claims

1. Process for reprocessing plastic wastes and/or plastic waste material made of polyaddition products of diols and diisocyanates, in particular polyurethanes, in which the starting material is first precomminuted, mixed with diol(s) and reacted under the action of heat and mechanical energy to give a polyol mixture and the secondary polyol thus obtained is used as a raw material for the production of new plastic components, characterized in that for reprocessing plastic wastes which are mixed with or joined to nonglycolysable additives, the reaction to form a polyol mixture proceeds in the three following steps:
. the comminuted starting material is further comminuted at a temperature of 150 to 250°C for 1 to 15 minutes with a - first - addition of glycol(s) in a ratio of 10:1 to 1:1 under forced shear effect, principally the nonglycolysable materials being precomminuted and dispersed and the glycolysable materials being preglycolysed and a mixture subsequently termed "preproduct" being produced,
. the glycolysis of the polyaddition products from the preproduct is continued in a spatially separate treatment vessel at a temperature of 150 to 280°C for 30 to 150 minutes with constant stirring and the resulting mixture subsequently termed "preglycolysame" is homogenized,
. after a - second - glycol addition in the ratio of 10:1 to 1:1, the polyaddition products are substantially broken down for a further 30 to 150 minutes at the same temperature, maintaining stirring, to give a mixture subsequently termed "secondary polyol" and the nonglycolysable constituents contained in this mixture are further dispersed.

2. Process according to Claim 1, characterized in that, in the first glycol addition to the precomminuted starting material, a glycol or a glycol mixture is added in a weight ratio of 7:1 to 4:1.

3. Process according to Claim 1, characterized in that in the first glycol addition to the precomminuted starting material, diethylene glycol (DEG) or a mixture of diethylene glycol and 1,2-propylene glycol is added in a weight ratio of 7:1 to 4:1.

4. Process according to Claim 1, characterized in that in the first glycol addition to the precomminuted starting material, a preheated diol is added or preheated diols are added.

5. Process according to Claim 1, characterized in that the forced shear stressing of the mixture proceeds in the first treatment stage in a shear reactor.

6. Process according to Claim 1, characterized in that the nonglycolysable constituents of the preproduct are comminuted in the first treatment stage to a particle size of 1000 to 50 µm.

7. Process according to Claim 6, characterized in that the nonglycolysable constituents of the preproduct are comminuted in the first treatment stage to a particle size of 400 to 100 µm.

8. Process according to Claim 1, characterized in that the mixture in the first treatment stage is subjected to forced shear stress for a period of 1 to 5 minutes, maintaining a temperature of 180 to 200°C.

9. Process according to Claim 1, characterized in that the forced shear stress of the mixture is carried out in the first treatment stage at a superatmospheric pressure of 5 to 300 bar.

10. Process according to Claim 9, characterized in that the forced shear stress of the mixture is carried out in the first treatment stage at a superatmospheric pressure of 10 to 100 bar.

11. Process according to Claim 1, characterized in that the preproduct obtained in the first treatment stage is intensively mixed in a subsequent stirred reactor for a period of 60 to 90 minutes, maintaining a temperature of 190 to 200°C.

## Revendications

1. Procédé pour le recyclage de déchets de résines synthétiques et/ou de résines synthétiques usagées consistant en produits de polyaddition de diols et de diisocyanates, en particulier en polyuréthannes, dans lequel la matière première est d'abord soumise à un broyage préalable, mélangée avec des diols et convertie sous l'action de chaleur et d'énergie mécanique en un mélange de polyols, le "polyol secondaire" ainsi obtenu étant utilisé comme matière première pour la fabrication de nouvelles pièces en résine synthétique, caractérisé ce que,
pour le recyclage de déchets de résine synthétique mélangés ou combinés avec des additifs non-glycolysables, la conversion en un mélange de polyols est réalisée par les trois stades opératoires suivants :
- la matière première broyée est à nouveau broyée avec une - première - addition de glycol(s) à un rapport de 10:1 à 1:1, à une température de 150 à 250°C pendant une durée de 1 à 15 minutes sous cisaillement forcé, avec en premier lieu broyage et dispersion des substances non glycolysables, les substances glycolysables étant soumises à une glycolisation préalable, donnant un mélange qu'on appelle ci-après "produit intermédiaire",
- on poursuit la glycolisation des produits de polyaddition du produit intermédiaire dans un récipient de traitement localement séparé à une température de 150 à 280°C pendant 30 à 150 minutes sous agitation constante et on homogénéise le mélange formé, appelé ci-après "préglycolysat",
- après une - deuxième - addition de glycol dans un rapport de 10:1 à 1:1, on dégrade les produits de polyaddition à la même température et maintien de l'agitation pendant 30 à 150 minutes, ce qui donne un mélange appelé "polyol secondaire" et on poursuit dans le mélange la dispersion des constituants non glycolysables.

2. Procédé selon revendication 1, caractérisé en ce que, à la première -addition de glycols à la matière première ayant subi le broyage préalable, on ajoute un glycol ou mélange de glycols à un rapport en poids de 7:1 à 4:1.

3. Procédé selon revendication 1, caractérisé en ce que, à la première addition de glycols à la matière première ayant subi le broyage préalable, on ajoute du diéthylèneglycol (DEG) ou un mélangé de diéthylèneglycol et de 1,2-propylèneglycol à un rapport en poids de 7:1 à 4:1.

4. Procédé selon revendication 1, caractérisé en ce que, à la première addition de glycol à la matière première ayant subi le broyage préalable, on ajoute un diol ou des diols chauffés au préalable.

5. Procédé selon revendication 1, caractérisé en ce que la contrainte de cisaillement forcé exercée sur le mélange au premier stade de traitement est réalisée dans un réacteur à cisaillements.

6. Procédé selon revendication 1, caractérisé en ce que les constituants non glycolysables du produit intermédiaire sont broyés dans le premier stade de traitement à une dimension de particule de 1000 à 50 µm.

7. Procédé selon revendication 6, caractérisé en ce que les constituants non glycolysables du produit intermédiaire sont broyés au premier stade de traitement à une dimension de particule de 400 à 100 µm.

8. Procédé selon revendication 1, caractérisé en ce que, au premier stade de traitement, le mélange est soumis à une contrainte forcée de cisaillement pendant une durée de 1 à 5 minutes à une température maintenue entre 180 et 220°C.

9. Procédé selon revendication 1, caractérisé en ce que la contrainte forcée de cisaillement exercée sur le mélange au premier stade de traitement est réalisée sous une pression manométrique de 5 à 300 bar.

10. Procédé selon revendication 9, caractérisé en ce que la contrainte forcée de cisaillement exercée sur le mélange au premier stade de traitement est réalisée sous une pression manométrique de 10 à 100 bar.

11. Procédé selon revendication 1, caractérisé en ce que le produit intermédiaire obtenu au premier stade de traitement est soumis à mélange intensif dans un réacteur successif à dispositif d'agitation pendant une durée de 60 à 90 minutes à une température maintenue entre 190 et 200°C.
